# EUROPÄISCHE PATENTSCHRIFT

(11) **EP 1 600 761 B1**
(45) Veröffentlichungstag und Bekanntmachung des Hinweises auf die Patenterteilung: **11.07.2007**
(21) Anmeldenummer: 04012601.3
(22) Anmeldetag: 27.05.2004
(51) Int. Cl.: G01N 21/35, B30B 15/00

(54) **Tablettenpresse mit integrierter NIR-Messvorrichtung**
Tabletting press with integrated NIR measurement device
Presse pour comprimés avec dispositif intégré de détection à infrarouge proche

(43) Veröffentlichungstag der Anmeldung: 30.11.2005
(73) Patentinhaber: Uhlmann VisioTec GmbH, 88471 Laupheim (DE)
(72) Erfinder: Mertens, Richard, Dipl.-Ing., 88471 Laupheim (DE); Prinz, Heino, Dr., 88471 Laupheim (DE)
(74) Vertreter: Wächter, Jochen

(56) Entgegenhaltungen:
- EP-A- 0 887 638
- EP-A- 1 568 480
- US-A- 4 893 253
- US-A- 5 442 437
- US-A- 6 064 056
- US-A- 6 079 968

## Beschreibung

Die Erfindung betrifft eine Tablettenpresse zur Herstellung von Tabletten aus pulverförmigen Substanzen.

Derartige Tablettenpressen sind meist als Rundläuferpressen ausgebildet, bei denen zunächst die Befüllung der Presshöfe mit einer bereits vorgemischten pulverförmigen Substanz erfolgt, anschließend zwei Pressstempel mit geeigneter Form das Pulver zu einer gewünschten Tablettenform pressen, und die fertige Tablette schließlich ausgeworfen und zur Verpackungsanlage weiterbefördert wird. Die Fördergeschwindigkeit solcher Rundläuferpressen ist enorm hoch und beträgt üblicherweise 250.000 bis 1.000.000 Tabletten pro Stunde.

In der US 6,079,968 ist beispielsweise eine Tablettenpresse offenbart, die außerdem eine integrierte Messvorrichtung für den Grad an Pulverrückständen auf den Pressinstrumenten aufweist, wobei ein kommerziell erhältlicher Reflektionssensor verwendet wird, der das von der zu überprüfenden Oberfläche im Pressbereich nach der Pressung reflektierte Licht mittels optischer Fasern verarbeitet.

Im Bereich der Herstellung von Arzneimitteln gibt es neben dem Wunsch nach Produktivitätssteigerung auch ständige Bestrebungen, die Qualitätskontrolle zur Erhöhung der Arzneimittelsicherheit zu verbessern. Die Herstellung erfolgt dabei nach dem internationalen Standard der Guten Herstellpraxis (Current Good Manufacturing Practice, CGMP), der durch die Arzneimittelüberwachungsbehörden vorgegeben wird (beispielsweise der USamerikanischen Food and Drug Administration, FDA). Bei schwerwiegenden Verstößen gegen diese Herstellpraxis kann einem Unternehmen die Erlaubnis zur Herstellung von Arzneimitteln entzogen werden.

Ein wichtiger Teil der Guten Herstellpraxis ist die physikalisch-chemische und mikrobiologische Testung und Freigabe des fertigen Produkts. Im Zuge dieser Testung werden mehrere, die Qualität des Produkts beschreibende Parameter geprüft und gegen Spezifikationen verglichen. Die Spezifikationen sind entweder in den Zulassungsunterlagen oder in den internationalen Arzneibüchern hinterlegt. Wenn alle Spezifikationen eingehalten sind, kann das Produkt vermarktet werden. Einer dieser Prüfparameter ist der Wirkstoffgehalt, der quantitativ bestimmt werden muss. Ein anderer Parameter ist die Presshärte der Tablette. Die quantitative Bestimmung bzw. die Härtebestimmung erfolgt üblicherweise stichprobenartig und in Form einer zerstörenden Prüfung. Als Analysemethoden werden bevorzugt flüssigchromatographische oder gaschromatographische Verfahren oder auch spektroskopische Verfahren eingesetzt, die zum Teil einer Probenaufarbeitung bedürfen. Zur Härtemessung wird eine zerstörende mechanische Festigkeitsanalyse durchgeführt. Diese Verfahren zeichnen sich durch eine relativ hohe Präzision aus, die Analysegeschwindigkeit ist allerdings sehr gering. Daher sind diese Verfahren nicht geeignet, in line, also direkt während des Herstellprozesses, ein Ergebnis zu liefern.

Der Nachteil der stichprobenartigen Chargenprüfung besteht darin, dass Trends oder außergewöhnliche Ereignisse innerhalb der Tablettenproduktion nicht erfasst werden können. Es besteht die Gefahr, dass Tabletten als spezifikationsgerecht freigegeben werden, obwohl sie in Wirklichkeit nicht innerhalb der Freigabegrenzen liegen. Diese "out-ofspecification" (OOS) Produkte können beispielsweise durch kurzzeitige Produktionsprobleme auftreten.

Prinzipiell geeignet für eine lückenlose Überprüfung von Produktströmen ist die Spektroskopie im nahen Infrarotbereich. Das europäische Patent EP-B-0 887 638 beschreibt beispielsweise ein Verfahren und eine Vorrichtung zur Analyse der Zusammensetzung von sich bewegenden Tabletten oder Kapseln, wobei eine Nahinfrarot (NIR)-Strahlungsquelle eingesetzt wird und das von der Tablette reflektierte NIR-Licht detektiert und untersucht wird. Dabei konnten jedoch nur Geschwindigkeiten von ca. 50.000 Probenanalysen pro Stunde erreicht werden, was lediglich einen Einsatz mit relativ langsamen Förderbändern erlaubt.

Das europäische Patent EP 1 568 480 beschreibt eine Vorrichtung zur Qualitätsüberwachung bei der Herstellung von Tabletten in einer Rundläuferpresse mit einem im Pressraum integrierten NIR- oder LIF-Sensor. Dieses Dokument gehört lediglich gemäß Artikel 54(3) zum Stand der Technik.

Der vorliegenden Erfindung liegt die Aufgabe zugrunde, eine Tablettenpresse zu schaffen, in der gleichzeitig eine äußerst zuverlässige Qualitätskontrolle der hergestellten Tabletten erfolgt.

Diese Aufgabe wird durch die Merkmale des Anspruchs 1 gelöst.

Die erfindungsgemäße Tablettenpresse weist mehrere Pressstempel und eine integrierte Messvorrichtung zur Bestimmung des quantitativen Gehalts mindestens einer Substanz in einer Tablette auf, die mindestens eine Strahlungsquelle, die Strahlung im nahen Infrarotbereich emittiert, zum Bestrahlen der Tablette umfasst, eine in einem Messkopf enthaltene Strahlungsempfangsvorrichtung, die die durch die Tablette reflektierte Strahlung empfängt, wobei der Messkopf in einem Bereich angeordnet ist, wo der jeweilige Pressstempel die Tablette freigegeben hat; ein Spektrometer zum Empfangen der Strahlung von der Strahlungsempfangsvorrichtung und zum Bereitstellen eines Ausgangssignals entsprechend der Intensität der empfangenen Strahlung bei einer Anzahl unterschiedlicher Wellenlängen sowie eine Vorrichtung zur quantitativen Bestimmung des Gehalts mindestens einer in der Tablette enthaltenen Substanz bzw. zur Bestimmung der Verhältnisse mehrerer oder aller enthaltenen Komponenten auf Basis des Ausgangssignals. Dabei ist die Messvorrichtung geeignet, innerhalb von weniger als 10 ms eine Messung durchzuführen und somit jede einzelne gepresste Tablette zu messen. Die Auslösezeitpunkte der Messungen sind mit der Fördergeschwindigkeit der Tablettenpresse korreliert.

Die Messvorrichtung bestimmt dabei quantitativ den Gehalt einer bestimmten Substanz mittels mathematischer Verfahren auf Basis des Ausgangssignals des Spektrometers und ist geeignet, unmittelbar zu entscheiden, ob sich die gemessene Tablette innerhalb vorbestimmter Integritätskriterien befindet oder nicht.

Die Messvorrichtung kann auch in der Lage sein, aus den vorliegenden Gehaltsverhältnissen mittels geeigneter mathematischer Verfahren auf Basis des Ausgangssignals des Spektrometers die Presshärte zu bestimmen und unmittelbar zu entscheiden, ob sich die gemessene Tablette innerhalb vorbestimmter Toleranzkriterien befindet oder nicht.

Vorteilhafterweise weist das Spektrometer der Messvorrichtung der erfindungsgemäßen Tablettenpresse eine Vorrichtung zum Aufsplitten der empfangenen Strahlung in eine Anzahl von Wellenlängen zur Detektion durch ein Photodiodenarray auf, welches besonders kurze Belichtungszeiten erlaubt.

Bevorzugterweise weist die erfindungsgemäße Tablettenpresse eine Strahlungsquelle im nahen Infrarotbereich (800 nm bis 2500 nm) auf, beispielsweise eine Quecksilber-Halogenlampe.

Um die Strahlungsquelle getrennt von der Pressvorrichtung anordnen zu können, weist die erfindungsgemäße Vorrichtung mindestens einen Lichtleiter auf, der zwischen der Strahlungsquelle und dem Messkopf angeordnet ist und die von der Strahlungsquelle emittierte Strahlung an den Ort der Messung, d.h. auf die zu messende Tablette, leitet.

In gleicher Weise ist vorteilhafterweise zwischen dem Messkopf und dem Spektrometer mindestens ein Lichtleiter angeordnet, der die von der Tablette reflektierte Strahlung zum Spektrometer leitet, so dass das Spektrometer außerhalb der Pressvorrichtung angeordnet werden kann.

Der Messkopf weist bevorzugterweise am Eingang bzw. Ausgang der Lichtleiter eine Sammellinse zum Erzielen einer möglichst großen Lichtausbeute auf.

Weiter kann der Messkopf ein NIR-durchlässiges Glasfenster aufweisen, um eine Verschmutzung der Eingangs- und Ausgangsoptiken zu vermeiden.

Es ist insbesondere von Vorteil, wenn das NIR-durchlässige Glasfenster eine selbstreinigende Oberfläche aufweist, wodurch der Wartungsaufwand deutlich reduziert wird und eine Verfälschung der Messergebnisse verhindert wird.

Alternativ weist der Messkopf Öffnungen zum Einblasen eines Luftvorhangs auf, wodurch der Messbereich von die Messung möglicherweise verfälschenden Partikeln freigehalten wird.

Ebenfalls alternativ weist der Messkopf Öffnungen zum Absaugen der Umgebungsluft auf, wodurch der Messbereich von die Messung möglicherweise verfälschenden Partikeln freigehalten wird. Auch eine Kombination aus Absaug- und Einblasvorrichtung ist möglich.

Ein besonderer Vorteil der Tablettenpresse ist, dass das Spektrometer geeignet ist, innerhalb von weniger als 10 ms, vorzugsweise 2 ms eine Messung durchzuführen. Dies wird u.a. durch den Einsatz des Photodiodenarrays erreicht, das zudem entsprechend der hohen geforderten Genauigkeit eine notwendige Anzahl von Einzeldetektorelementen aufweist.

Die Synchronizität des Mess- und Auswertevorgangs mit dem Pressvorgang wird insbesondere dadurch erreicht, dass die Messvorrichtung geeignet ist, entsprechend der pro Zeiteinheit die Messvorrichtung durchlaufenden Anzahl von Tabletten ein Auslösesignal zu verarbeiten.

Ein weiterer Vorteil der erfindungsgemäßen Tablettenpresse ist, dass die Auslösezeitpunkte der Messungen automatisch aus der Geschwindigkeit der Tablettenpresse bestimmbar sind.

Der Messkopf der Tablettenpresse ist bevorzugterweise derart angeordnet, dass die Messung zwischen der Freigabe der Tablette durch die Pressstempel und dem Auswurf der Tablette erfolgt.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: eine schematische Darstellung der erfindungsgemäßen Tablettenpresse mit den Bestandteilen der Messvorrichtung; und
- Fig. 2: eine schematische Querschnittansicht einer bevorzugten Ausführungsform der erfindungsgemäßen Vorrichtung.

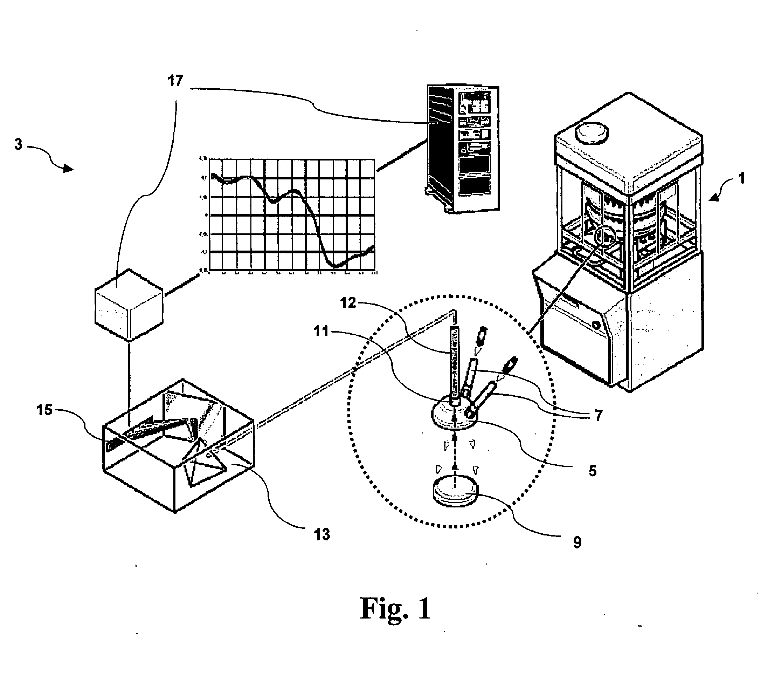

Figur 1 zeigt schematisch eine bevorzugte Ausführungsform der erfindungsgemäßen Tablettenpresse 1. Die Elemente der integrierten Messvorrichtung 3 sind zum Zwecke der Anschaulichkeit einzeln dargestellt. Die Messvorrichtung 1 umfasst mindestens eine Strahlungsquelle (in Fig. 1 nicht dargestellt) im NIR-Bereich, beispielsweise eine Quecksilber-Halogenlampe oder eine Wolfram-Halogenlampe. Ein Messkopf 5 ist beispielsweise fest innerhalb der Tablettenpresse 1 im Bereich zwischen den umlaufenden Pressstempeln angeordnet. Die von der Strahlungsquelle emittierte Nahinfrarot-Strahlung wird mittels z.B. zwei Lichtleitern 7 zum Messkopf 5 und von dort symmetrisch auf die bereits gepresste Tablette 9 geleitet. Alternativ können die Strahlungsquellen auch direkt am Messkopf 5 angeordnet sein, um über eine geeignete Optik die Tablette 9 direkt zu bestrahlen.

Die von der Tablette 9 diffus reflektierte Strahlung wird in der Strahlungsempfangsvorrichtung 11, die ebenfalls am Messkopf 5 angeordnet ist, aufgenommen, vorzugsweise von einer Sammellinse (nicht dargestellt) und mittels eines Lichtleiters 12 dem Spektrometer 13 zugeleitet. In dem Spektralsensor 13 wird die reflektierte Strahlung, welche die spektrale Information der bestrahlten Tablette 9 enthält, auf bekannte Weise, beispielsweise mittels eines Gitters, in Strahlung unterschiedlicher Wellenlängen aufgesplittet und von einem Photodiodenarray 15 detektiert. Die von dem Photodiodenarray 15 in Abhängigkeit von der Wellenlänge detektierten Intensitäten werden in der Bestimmungsvorrichtung 17 mittels eines A/D-Konverters in digitale Signale umgewandelt und per Computer ausgewertet. Prinzipiell können auch FTNIR-Systeme oder akustooptische NIR-Systme zum Einsatz kommen, sobald deren Aufnahmegeschwindigkeit und Auflösung den Anforderungen genügen.

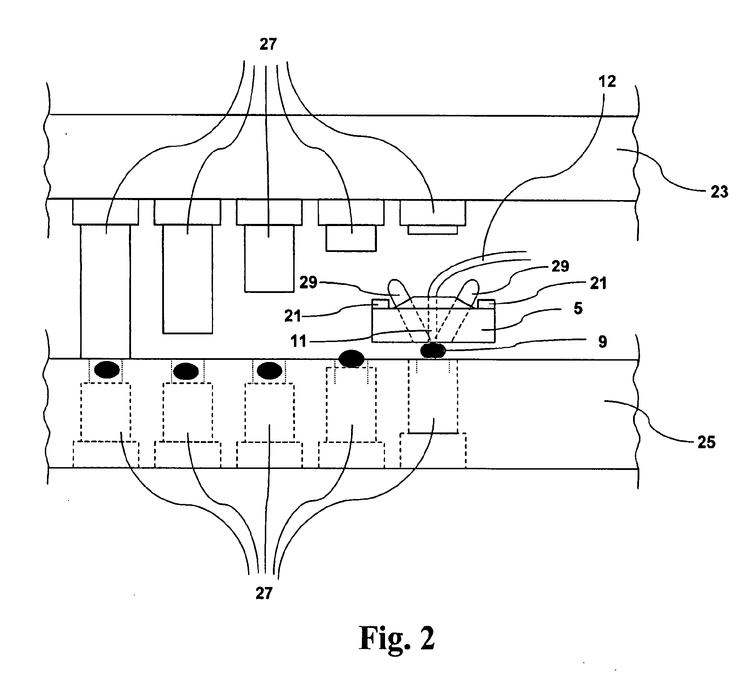

Fig. 2 zeigt eine schematische Querschnittansicht einer bevorzugten Ausführungsform der erfindungsgemäßen Vorrichtung, bei der der Messkopf 5 mittels an sich bekannter Befestigungselemente 21 ortsfest an der Tablettenpresse angebracht ist. Der obere bzw. untere Rundläufer 23, 25 weist eine festgelegte Anzahl von Pressstempeln 27 mit je nach Tablettenform ausgestaltetem Querschnitt und Pressfläche auf. Während eines Herstellungsumlaufs wird jede einzelne Tablette 9 von den Pressstempeln 27 mit einem bestimmten Druckverlauf gepresst, so dass sie vor ihrem Auswurf eine definierte endgültige Form aufweist. Der obere bzw. untere Rundläufer 23, 25 bewegt sich dabei üblicherweise mit einer gleichförmigen Geschwindigkeit. An einer definierten, für jede Tablette identischen Freigabeposition geben die Pressstempel 27 die Tablette 9 frei. An genau dieser Position wird die ortsfeste NIR-Bestrahlung und -Messung durch die auf dem Messkopf 5 angeordneten Elemente vorgenommen.

Die Strahlungsquellen 29 sind in der in Fig. 2 schematisch dargestellten Ausführungsform direkt auf dem Messkopf 5 angeordnet. Alternativ können in einer weiteren Ausführungsform an den Positionen der Strahlungsquellen 29, wie in Fig. 1 gezeigt, Lichtleiter 7 derart angeordnet sein, dass sie die Strahlung von einer entfernt angeordneten Strahlungsquelle 29 auf die Tablette 9 lenken. Die von der Tablette 9 diffus reflektierte Strahlung wird von der Strahlungsempfangsvorrichtung 11 teilweise erfasst und über den damit verbundenen Lichtleiter 12 zum Spektrometer 13 geleitet.

Um Verschmutzungen und damit verfälschte Messungen durch mögliche systematische Fehler zu vermeiden, kann an der Unterseite des Messkopfs 5 ein NIR-durchlässiges Glasfenster (nicht dargestellt) angeordnet sein. Zusätzlich kann dieses eine selbstreinigende Oberfläche aufweisen, die in Nanotechnologie ausgeführt ist. In gleicher Weise kann der Messkopf 5 geeignet geformte Öffnungen (ebenfalls nicht gezeigt) aufweisen, über die sich ein Luftvorhang zum Schutz vor Verschmutzungen einblasen bzw. Luft absaugen lässt. Damit ist sichergestellt, dass die optischen Elemente des Messkopfs 5 anhaltend gleiche Messbedingungen vorfinden.

Die Bestrahlung jeder einzelnen Tablette 9 erfolgt wie erwähnt vorzugsweise an einem festen Ort innerhalb der Rundläufer-Tablettenpresse 1, nämlich dort, wo die umlaufenden Pressstempel 27 die vollständig gepressten Tabletten 9 freigeben, bevor diese zur nächsten Station in der Produktlinie transportiert werden. Es ist auch der Einsatz eines beweglichen Sensorkopfes denkbar, der einige ms mit der Tablette mitläuft. Die Geometrie der Tablettenpresse 1, d.h. der Radius der Matrize und die genaue Position der Pressstempel 27 am Pressort, ist zusammen mit der Umlaufgeschwindigkeit der Tablettenpresse 1 ein Kriterium dafür, wie oft eine Messung ausgelöst werden muss. Der Eintritt einer für die Messung genau definierten Position auf der Tablette (z.B. der Mittelpunkt der von oben sichtbaren Oberfläche) in den NIR-Strahl kennzeichnet den exakten Startzeitpunkt der Messung, den Auslösezeitpunkt.

Die Zeitspanne zwischen zwei Messungen wird durch die zeitlichen Abstände der Auslösezeitpunkte festgelegt. Mit einem Trigger, der über die erwähnten Eigenschaften und Einstellungen (Geschwindigkeit, Abmessungen etc.) der Tablettenpresse 1 automatisch berechnet und ausgelöst wird oder alternativ beim Durchlauf einer Tablette 9 durch eine bestimmte Position über eine Lichtschranke ausgelöst wird, wird der Integrationszeitraum gestartet.

Die Strahlungsempfangsvorrichtung 11 empfängt die von der Tablette reflektierte Strahlung, die z.B. über einen Lichtleiter 12 zum Spektrometer 13 geleitet wird. Das Spektrometer 13 stellt entsprechend der Intensität der empfangenen Strahlung ein Ausgangssignal bei einer Anzahl von unterschiedlichen Wellenlängen bereit. Dies geschieht auf die Weise, dass das Spektrometer 13 die empfangene Strahlung in eine Anzahl von Wellenlängen aufsplittet und das Photodiodenarray 15 die Strahlung mit genügend hoher Auflösung detektiert. Der Strom von jeder Photodiode wird über einen vorgewählten Zeitraum (kleiner 10 ms) integriert und anschließend mittels eines Analog/Digital (A/D)-Konverters in ein digitales Signal zur Verarbeitung in der Bestimmungsvorrichtung 17 umgewandelt.

Auf Basis des bei den unterschiedlichen Wellenlängen bereitgestellten Ausgangssignals wird in der Bestimmungsvorrichtung 17 mit einem mathematischen Verfahren der Gehalt der mindestens einen in der Tablette 9 enthaltenen Substanz quantitativ bestimmt. Die Elektronik muss hierbei dazu geeignet sein, die Ausgangssignale vom Array 15 innerhalb von 1 ms abzuholen. Geeignete mathematische Verfahren sind Verfahren zur multivariaten Datenanalyse. Geeignete Verfahren sind beispielsweise auch das PLS (partial least square)-Verfahren oder die Hauptkomponentenanalyse (PCA). Derartige Verfahren sind dem Fachmann bekannt.

Bei diesen Verfahren werden in der Regel die Differenzen zwischen einem auf bekannte Weise erhaltenen Modellspektrum und dem Spektrum der zu messenden Tablette bei jeder gemessenen Wellenlänge berechnet. Überschreiten diese Differenzen ein gesetztes Limit, so wird die Tablette als signifikant verschieden von dem Modell erkannt.

Die mathematischen Verfahren können Gewichtungsfaktoren verwenden, um den Einfluss von störenden, nicht auf die Zusammensetzung zurückzuführenden Variabilitäten in den aufgenommenen NIR-Spektren bei der Auswertung zu reduzieren und spektrale Merkmale hervorzuheben, die zwischen Proben des gleichen Tablettentyps nicht variieren.

Üblicherweise wird zuvor mindestens einmal eine Kontrollmessung durchgeführt, indem der Gehalt der mindestens einen Substanz in der Tablette mittels eines alternativen anerkannten Verfahrens quantitativ bestimmt wird.

Zur Durchführung des Verfahrens kann das in der EP-B-0 887 638 auf den Seiten 5, Zeile 47 bis Seite 8, Zeile 12 beschriebene mathematische Verfahren verwendet werden. Bei dem dort beschriebenen mathematischen Verfahren werden Gewichtungsfaktoren verwendet.

Anschließend kann das Ergebnis der Integritätsprüfung verwendet werden, um z.B. ungeeignete Tabletten 9 auszusortieren oder den gesamten Herstellungsprozess anzuhalten.

Mit der beschriebenen Tablettenpresse mit integrierter Messvorrichtung kann eine Herstellung und Analyse von bis zu 1.000.000 Tabletten pro Stunde erfolgen, wobei die Daten einer Tablette innerhalb eines Zeitfensters von weniger als 10 ms, bevorzugt weniger als 7 ms, und mehr bevorzugt weniger als 2 ms verarbeitet werden.

Die erfindungsgemäße Tablettenpresse mit integrierter Messvorrichtung ermöglicht dadurch die Analyse sämtlicher gepresster Tabletten in Echtzeit mit der selben Geschwindigkeit, mit der bisher Tabletten lediglich gepresst wurden. Damit ist eine Vorrichtung gegeben, mit der sich 100% aller gepressten Tabletten unmittelbar nach dem Herstellungsprozesses berührungsfrei einer detaillierten Qualitätskontrolle unterziehen lassen.

## Patentansprüche

1. Tablettenpresse mit integrierter Messvorrichtung (3) zur Bestimmung des quantitativen Gehalts mindestens einer Substanz in einer gepressten Tablette (9), wobei die Messvorrichtung umfasst:
mindestens eine Strahlungsquelle (29), die Strahlung im nahen Infrarotbereich emittiert, zum Bestrahlen der Tablette (9);
einen Messkopf (5) mit einer darin enthaltenen Strahlungsempfangsvorrichtung (11), die die durch die Tablette (9) reflektierte Strahlung empfängt;
ein Spektrometer (13) zum Empfangen der Strahlung von der Strahlungsempfangsvorrichtung (11) und zum Bereitstellen eines Ausgangssignals entsprechend der Intensität der empfangenen Strahlung bei einer Anzahl unterschiedlicher Wellenlängen; und
eine Vorrichtung (17) zur quantitativen Bestimmung des Gehalts mindestens einer in der Tablette (9) enthaltenen Substanz und/oder zur Bestimmung der Verhältnisse aller oder einiger enthaltener Komponenten auf Basis des Ausgangssignals;
wobei die Messvorrichtung (3) geeignet ist, jede einzelne gepresste Tablette (9) zu messen, und die Auslösezeitpunkte der Messungen mit der Fördergeschwindigkeit der Tablettenpresse korreliert sind, und
wobei der Messkopf (5) ein NIR-durchlässiges Glasfenster und Öffnungen zum Einblasen eines Luftvorhangs oder zum Absaugen von Luft aufweist.

2. Tablettenpresse nach Anspruch 1, **dadurch gekennzeichnet, dass** das Spektrometer (13) eine Vorrichtung zum Aufsplitten der empfangenen Strahlung in eine Anzahl von Wellenlängen zur Detektion durch ein Photodiodenarray (15) aufweist.

3. Tablettenpresse nach Anspruch 1 oder 2, **dadurch gekennzeichnet, dass** die Strahlungsquelle (29) eine Quecksilber-Halogenlampe ist.

4. Tablettenpresse nach einem der vorhergehenden Ansprüche, **dadurch gekennzeichnet, dass** zwischen der Strahlungsquelle (29) und dem Messkopf (5) mindestens ein Lichtleiter (7) angeordnet ist, der die von der Strahlungsquelle (29) emittierte Strahlung auf die Tablette (9) leitet.

5. Tablettenpresse nach einem der vorhergehenden Ansprüche, **dadurch gekennzeichnet, dass** zwischen dem Messkopf (5) und dem Spektrometer (13) mindestens ein Lichtleiter (12) angeordnet ist, der die von der Tablette (9) reflektierte Strahlung zum Spektrometer (13) leitet.

6. Tablettenpresse nach Anspruch 4 oder 5, **dadurch gekennzeichnet, dass** der Messkopf (5) am Eingang bzw. Ausgang der Lichtleiter (7, 12) eine Sammellinse aufweist.

7. Tablettenpresse nach einem der vorhergehenden Ansprüche, **dadurch gekennzeichnet, dass** das NIR-durchlässige Glasfenster eine selbstreinigende Oberfläche aufweist.

8. Tablettenpresse nach einem der vorhergehenden Ansprüche, **dadurch gekennzeichnet, dass** das Spektrometer (13) geeignet ist, innerhalb von 2 ms eine Messung durchzuführen.

9. Tablettenpresse nach einem der vorhergehenden Ansprüche, **dadurch gekennzeichnet, dass** die Messvorrichtung (3) geeignet ist, mindestens alle 10 ms ein Auslösesignal zu verarbeiten.

10. Tablettenpresse nach einem der vorhergehenden Ansprüche, **dadurch gekennzeichnet, dass** die Auslösezeitpunkte der Messungen automatisch aus der Geschwindigkeit der Tablettenpresse bestimmbar sind.

11. Tablettenpresse nach einem der vorhergehenden Ansprüche, **dadurch gekennzeichnet, dass** der Messkopf (5) derart angeordnet ist, dass die Messung zwischen der Freigabe der Tablette (9) durch die Pressstempel (27) und dem Auswurf der Tablette (9) erfolgt.

## Claims

1. Tablets press with integral measuring device (3) for the determination of the quantitative content of at least one substance in a pressed tablet (9), the measuring device (3) comprising:
at least one radiation source (29), which emits radiation in the near infrared range, for irradiating the tablet (9);
a measuring head (5) comprising a radiation receiving device (11), which receives the radiation reflected by the tablet (9);
a spectrometer (13) for receiving the radiation from the radiation receiving device (11) and for supplying an output signal according to the intensity of the received radiation at a number of different wavelengths; and
a device (17) for the quantitative determination of the content of at least one substance contained in the tablet (9) and/or for the determination of the ratios of all or some contained components based on the output signal;
wherein the measuring device (3) is adapted to measure each single pressed tablet (9) and the trigger times of the measurements are correlated with the conveying speed of the tablets press; and
wherein the measuring head (5) comprises a glass window transparent to NIR radiation and openings for blowing in a curtain of air or for sucking out air.

2. Tablets press according to claim 1, **characterised in that** the spectrometer (13) comprises a device for splitting the received radiation into a number of wavelengths for detection by a photodiode array (15).

3. Tablets press according to claim 1 or 2, **characterised in that** the radiation source (29) is a mercury halogen lamp.

4. Tablets press according to any of the preceding claims, **characterised in that** at least one light guide (7) is arranged between the radiation source (29) and the measuring head (5) to guide the radiation emitted by the radiation source (29) to the tablet (9).

5. Tablets press according to any of the preceding claims, **characterised in that** at least one light guide (12) is arranged between the measuring head (5) and the spectrometer (13) to guide the radiation reflected by the tablet (9) to the spectrometer (13).

6. Tablets press according to claim 4 or 5, **characterised in that** the measuring head (5) comprises a collimating lens at the input and output portion of the light guides (7, 12), respectively.

7. Tablets press according to any of the preceding claims, **characterised in that** the glass window transparent to NIR radiation comprises a self-cleaning surface.

8. Tablets press according to any of the preceding claims, **characterised in that** the spectrometer (13) is adapted to carry out a measurement within 2 ms.

9. Tablets press according to any of the preceding claims, **characterised in that** the measuring device (3) is adapted to process a trigger signal at least every 10 ms.

10. Tablets press according to any of the preceding claims, **characterised in that** the trigger times of the measurements can be determined automatically from the speed of the tablets press.

11. Tablets press according to any of the preceding claims, **characterised in that** the measuring head (5) is arranged such that the measurement is performed between the release of the tablet (9) by the press punches (27) and the ejection of the tablet (9).

## Revendications

1. Presse pour comprimés comprenant un dispositif de mesure intégré (3) pour la détermination de la teneur quantitative d'au moins une substance dans un comprimé (9) pressé, le dispositif de mesure comprenant :
- au moins une source de rayonnement (29), qui émet un rayonnement dans le domaine infrarouge proche pour l'irradiation du comprimé (9) ;
- une tête de mesure (5) avec un dispositif de réception de rayons (11) contenu dans cette dernière, qui reçoit le rayonnement réfléchi par le comprimé (9) ;
- un spectromètre (13) pour recevoir le rayonnement du dispositif de réception de rayons (11) et pour fournir un signal de sortie correspondant à l'intensité du rayonnement reçu pour un nombre de longueurs d'ondes différentes ; et
- un dispositif (17) pour la détermination quantitative de la teneur d'au moins une substance contenue dans le comprimé (9) et/ou pour la détermination des proportions de tous ou de quelques composants contenus sur la base du signal de sortie ;
- le dispositif de mesure (3) se prêtant à la mesure de chaque comprimé individuel (9) pressé, et les instants de déclenchement des mesures étant en corrélation avec la vitesse de transport de la presse pour comprimés, et
- la tête de mesure (5) présentant une fenêtre de verre transparente à l'infrarouge proche et des orifices pour l'insufflation d'un rideau d'air ou pour l'aspiration d'air.

2. Presse pour comprimés suivant la revendication 1, **caractérisée en ce que** le spectromètre (13) comporte un dispositif de décomposition du rayonnement reçu en un nombre de longueurs d'ondes pour la détection par une mosaïque de photodiodes (15).

3. Presse pour comprimés suivant l'une des revendications 1 et 2, **caractérisée en ce que** la source de rayonnement (29) est une lampe halogène au mercure.

4. Presse pour comprimés suivant l'une des revendications précédentes, **caractérisée en ce qu'**au moins un guide de lumière (7), qui dirige le rayonnement émis par la source de rayonnement (29) sur le comprimé (9), est disposé entre la source de rayonnement (29) et la tête de mesure (5) .

5. Presse pour comprimés suivant l'une des revendications précédentes, **caractérisée en ce qu'**au moins un guide de lumière (12), qui dirige le rayonnement réfléchi par le comprimé (9) en direction du spectromètre (13), est disposé entre la tête de mesure (5) et le spectromètre (13).

6. Presse pour comprimés suivant l'une des revendications 4 et 5, **caractérisée en ce que** la tête de mesure (5) comporte une lentille convexe à l'entrée ou à la sortie des guides de lumière (7, 12).

7. Presse pour comprimés suivant l'une des revendications précédentes, **caractérisée en ce que** la fenêtre de verre transparente à l'infrarouge proche présente une surface autonettoyante.

8. Presse pour comprimés suivant l'une des revendications précédentes, **caractérisée en ce que** le spectromètre (13) se prête à la réalisation d'une mesure en 2 ms.

9. Presse pour comprimés suivant l'une des revendications précédentes, **caractérisée en ce que** le dispositif de mesure (3) se prête à traiter un signal de déclenchement au moins toutes les 10 ms.

10. Presse pour comprimés suivant l'une des revendications précédentes, **caractérisée en ce que** les instants de déclenchement des mesures sont définissables automatiquement à partir de la vitesse de la presse pour comprimés.

11. Presse pour comprimés suivant l'une des revendications précédentes, **caractérisée en ce que** la tête de mesure (5) est disposée de telle sorte que la mesure s'effectue entre le dégagement du comprimé (9) par les pistons de presse (27) et l'éjection du comprimé (9).
